# EUROPEAN PATENT APPLICATION

(11) **EP 4 438 330 A1**
(43) Date of publication of application: **02.10.2024**
(21) Application number: 24166643.7
(22) Date of filing: 27.03.2024
(51) Int. Cl.: B60C 1/00, C08L 7/00, C08K 3/04, C08K 3/36, C08K 5/3445, C08K 3/22, C08K 5/09

(54) **LOW ROLLING RESISTANCE COATING COMPOSITION**

(30) Priority: 29.03.2023 US 202318127900
(71) Applicant: The Goodyear Tire & Rubber Company, Akron, OH 44316 (US)
(72) Inventor: JOHNSON, Dawn Michelle, Uniontown, 44685 (US); WELTER, Carolin Anna, 54340 Schleich (DE); SCHMIDT, Ryan Michael, Wadsworth, 44281 (US)
(74) Representative: Kutsch, Bernd

(57) **Abstract**

A rubber composition is disclosed comprising: 100 phr of elastomer, the elastomer comprising 60-100 phr of a conjugated diene elastomer; at least 20 phr of carbon black, the carbon black having a statistical thickness surface area (STSA), as determined according to ASTM D6556-21, of from 50 m²/g to 70 m²/g; at least 5 phr silica; a sulfur-based curing agent; an accelerator for the curing agent; and optionally at least 0.1 phr of a tear strength agent. Also, cord-reinforced rubber component for a tire, preferably a tire ply, is disclosed. The cord-reinforced rubber component comprises cords encapsulated by said rubber composition.

## Description

### FIELD OF THE INVENTION

The invention relates to rubber compositions and in particular, to a composition suited to use as a coating for cords used in plies of a tire, such as a carcass ply, a tire belt ply, a tire overlay ply, or a ply strip.

### BACKGROUND

To provide added strength, tires often contain reinforcing materials in the form of metal or fabric cords. Each cord may be composed of one or more wires. The cords are generally encapsulated in a rubber material to form a ply. Each ply may incorporate several cords, running generally in parallel to each other. To provide good tire properties, such as low rolling resistance, it is desirable to provide a tire with internal components and plies of reinforced rubber composites having low hysteresis (e.g., as determined using the Tangent Delta (tan Δ) measure, while maintaining other desirable properties. In the case of plies used in the carcass of the tire, for example, it is desirable to optimize high stiffness, high tear, and high wire cord adhesion, in combination with low hysteresis.

To modify tire properties, coating compositions containing natural rubber and reinforcing materials, such as carbon black, and particulate filler have been developed for forming plies. A coupling agent may be incorporated into the cord-reinforced rubber composition for coupling fillers, such as silica, to the natural rubber, as described, for example, in U.S. Pub. No. 2006/0169382 A1. This rubber composition also includes the resinous reaction product of hexamethoxymethylmelamine and a methylene acceptor compound, and also includes a cobalt salt. U.S. Pub. No. 2009/0151838 A1 describes use of a resin which is the reaction product of hexamethoxymethylmelamine and a methylene acceptor (phenol Novolac resin or resorcinol) that is formed in situ within the rubber composition. While the addition of such resin systems may result in improved stiffness and/or adhesion properties, it also has some disadvantages, such as a more complex mixing process.

The precipitated silica used in a coating composition may be pre-silanized, as described in U.S. Pat. No. 11,441,019. This ply coat rubber composition also includes a cobalt salt and optionally a resin and/or an oil.

Carbon black is often used in coating compositions, e.g., in place of silica. U.S. Pat. No. 6,220,326 B1 describes a tire including a carcass ply including a cord reinforced rubber composition formed without silica, including natural rubber, a cis-1,4-polybutadiene rubber and optionally up to 10 phr of another rubber; a carbon black with specific properties; and a natural rosin acid. U.S. Pat. No. 10,072,154 describes a carbon black product useful in elastomer compositions for tires and their components which includes aggregates of carbon black having specific properties that are intermediate those of some existing grades. The product is indicated to exhibit low rolling resistance and low heat build-up under service conditions when incorporated into rubber compositions for tires.

One problem with many existing coating formulations is that they are unable to yield improvements in rolling resistance without giving up tear resistance properties, and vice versa.

### SUMMARY OF THE INVENTION

The invention relates to a rubber composition in accordance with claim 1, to a cord-reinforced rubber component for a tire in accordance with claim 10, to a tire in accordance with claim 12, to a method in accordance with claim 13 and to a ply of a tire in accordance with claim 15.

Dependent claims refer to preferred embodiments of the invention.

In accordance with a preferred aspect of the invention, a rubber composition includes 100 phr of elastomer, the elastomer including 60-100 phr of a conjugated diene elastomer; at least 20 phr of an intermediate carbon black, the intermediate carbon black having a statistical thickness surface area (STSA), as determined according to ASTM D6556-21, of from 50 m²/g to 70 m²/g; at least 5 phr of silica; at least 0.1 phr of a tear strength agent; a sulfur-based curing agent; and an accelerator for the curing agent.

In the rubber composition the intermediate carbon black may preferably have an STSA of at least 55 m²/g, or at least 57 m²/g. The intermediate carbon black may preferably have an STSA of up to 65 m²/g, or up to 62 m²/g. The intermediate carbon black may preferably have an Oil Absorption Number (OAN) of at least 132 cc/100g and/or up to 149 cc/100g, as determined herein according to ASTM D2414-22. The intermediate carbon black may preferably have an Oil Absorption Number of a Compressed sample (COAN) determined according to ASTM D3493-21, of at least 90 cc/100g, or at least 95 cc/100g, or up to 110 cc/100g, or up to 105 cc/100g.

The rubber composition may preferably include at least 8 phr of silica. A ratio by weight of carbon black to silica may preferably be at least 0.8:1 or at least 3:1. The silica may preferably have a CTAB surface area of at least 160 m²/g, or at least 220 m²/g. The rubber composition may preferably further include at least 0.1 phr of a silica coupling agent.

The rubber composition may further include at least 0.1 phr of a cobalt salt.

In the rubber composition, the tear strength agent may preferably include 3-methyl-5-pyrazolone, e.g., in an amount of at least 0.1 phr.

The rubber composition may preferably further include at least 1 phr of zinc oxide and/or at least 0.5 phr of a fatty acid and/or at least 0.2 phr of a cure accelerator.

In another preferred aspect of the invention, a cord-reinforced rubber component for a tire includes a plurality of cords encapsulated by the rubber composition. The cord-reinforced rubber component may preferably include a tire ply. The cords of the cord-reinforced rubber component may preferably each include at least one of metal wires and a fabric material.

In another aspect, a tire may include the cord-reinforced rubber component.

In accordance with another preferred aspect of the invention, a method of forming a cord-reinforced rubber component includes forming a rubber composition, including combining 100 phr of elastomer, the elastomer including 60-100 phr of a conjugated diene elastomer, at least 30 phr of an intermediate carbon black, the intermediate carbon black having an STSA of from 50 m²/g to 70 m²/g, at least 0.1 phr of a tear strength agent, a sulfur-based curing agent, and an accelerator for the curing agent; coating at least one cord with the rubber composition; and curing the rubber composition coating the at least one cord to form the cord-reinforced rubber component.

The method may preferably further include assembling uncured components of a tire, the components of the tire comprising a tire tread and the cord-reinforced rubber component.

In accordance with another preferred aspect of the invention, a ply of a tire formed by coating a plurality of cords with a rubber composition and curing the rubber composition is disclosed. The rubber composition includes 100 phr of elastomer comprising 60-100 phr cis 1,4 polyisoprene, 20 - 60 phr of an intermediate carbon black, 6 - 20 phr silica having a CTAB surface area of at least 220 m²/g, 0.1 - 6 phr of a silica coupling agent, 0.1 - 3 phr of a tear strength agent, 0.1 - 5 phr of a cobalt salt, 0.1 - 10 phr of an antidegradant, 0.5 - 10 phr of a fatty acid, 1-20 phr of zinc oxide, 0.1 - 10 phr of a sulfur-based curing agent, and 0.2 - 5 phr of a cure accelerator.

### BRIEF DESCRIPTION OF THE DRAWINGS

FIGURE 1 is a schematic cross-sectional view of a tire in accordance with one embodiment; and
FIGURE 2 is a schematic cross-section of a ply (e.g., a belt, carcass or overlay ply) including cords coated with a rubber composition in accordance with another embodiment.

### DETAILED DESCRIPTION OF PREFERRED EMBODIMENTS OF THE INVENTION

In one aspect of an exemplary embodiment, a rubber composition suited to forming plies of a pneumatic tire, such as carcass plies, is disclosed The composition incorporates a carbon black of an intermediate grade, particulate silica, which may include a high surface area silica, and a chemical additive which improves tear resistance. In combination with a conjugated diene elastomer, in particular, a natural or synthetic cis-1,4-isoprene-based rubber component, these additives are able to form a composition for a tire component such as a carcass ply, barrier ply, belt package, overlay, wire, fabric, or bead coating, or combination of components which support low rolling resistance of truck tires while maintaining or improving tear resistance.

In the description of this invention, the term "phr" refers to parts of a respective material per 100 parts by weight of rubber, or elastomer. The term "phf" refers to parts per hundred filler, by weight. By convention, the uncured rubber employed in the rubber composition, totals 100 phr.

The terms "rubber" and "elastomer" may be used interchangeably unless otherwise indicated. The terms "cure" and "vulcanize" may be used interchangeably unless otherwise indicated.

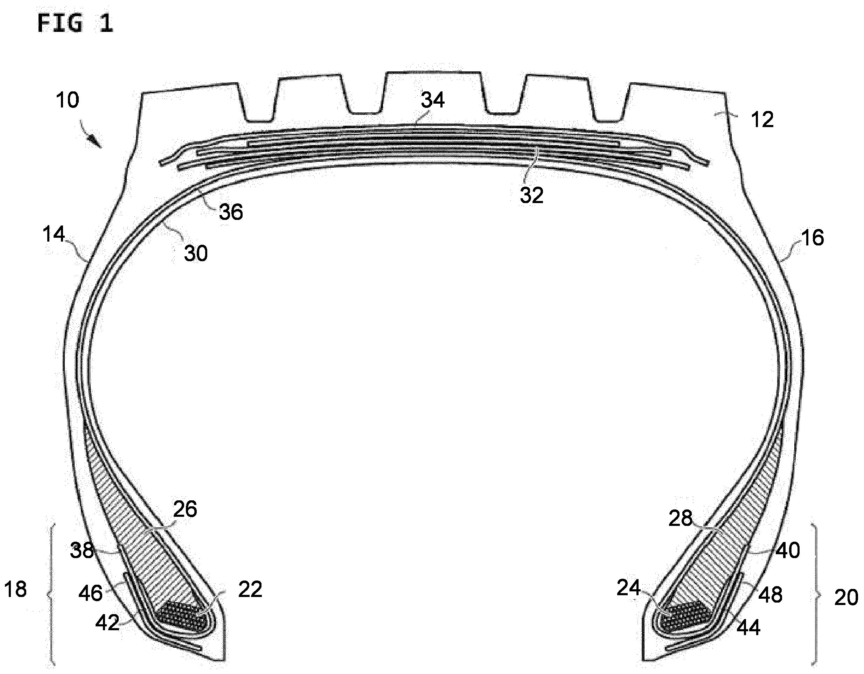

With reference to FIGURE 1, a pneumatic tire 10 includes a tire tread 12, which defines a road-contacting surface of the tire. Two sidewalls 14, 16, extend from the tread to respective bead regions 18, 20. Each bead region includes a bead or beads 22, 24, that may be held in place by respective bead filler apexes 26, 28. An inner liner 30, defines an inner-most surface of the tire.

The tire includes a belt structure including a set of belt plies 32 (four in the illustrated embodiment), an overlay ply 34, which covers the belt plies, and a carcass ply 36, interior of the belt plies. The illustrated carcass ply 36 includes a pair of axially opposite end portions 38, 40, each of which is associated with a respective one of the beads 22, 24. Each axial end portion 38, 40 of the carcass ply 36 may be turned up and around the respective bead to a position to anchor the respective axial end portion. The turned-up portion 38, 40 of the carcass ply may engage the axial outer surfaces of respective flippers 42, 44 and axial inner surfaces of respective chippers 46, 48. The example tread 10 has circumferential grooves (four in the illustrated embodiment), each groove defining a U-shaped opening in the tread 10. The tread 12, sidewalls, and carcass may be formed of one or more rubber-based compositions. The example tire is suitable, for example, for mounting on a rim of a vehicle, e.g., a truck or a passenger car. As will be appreciated, the general construction of the tire 10 may differ from that illustrated in FIGURE 1 and may include fewer or more components.

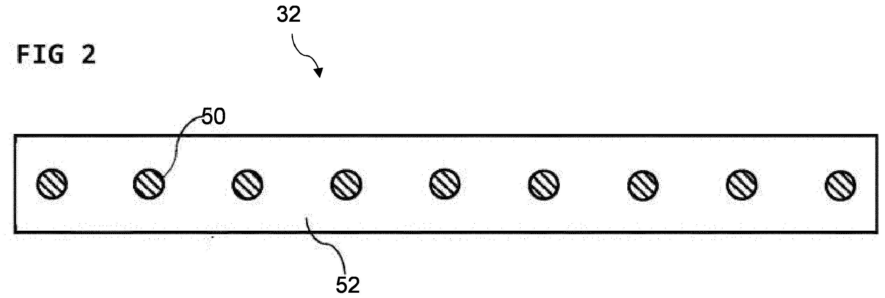

As illustrated in FIGURE 2, one or more of the components of the tire, in particular, the belt plies 32, the overlay ply 34, and/or the carcass ply 36, may include a set of substantially parallel reinforcing members, such as cords 50, e.g., at least two cords, or at least three or at least four cords, or up to ten cords. The cords may be made of metal wire(s), a fabric material, such as polyester, rayon, or similar suitable organic polymeric material, or combinations thereof. The cords are spaced by and encapsulated in a strip 52 formed from a rubber composition as described herein. The cords 50 serve to reinforce the rubber composition in the strip 52.

Each ply may be formed in a wire calendar in which a plurality of essentially parallel cords, e.g., metal wires is coated from both sides with a layer or sheet of the exemplary rubber composition. During curing, the cords are embedded in the strip of rubber composition 52, reinforcing the same. In some embodiments, prior to coating with the rubber composition, the cords 50 may be dipped in a dipping solution or emulsion for better adhesion to the rubber composition.

### The Rubber Composition

The exemplary rubber composition suitable for forming the plies includes an elastomer component, including at least one conjugated diene; a reinforcing filler component, including carbon black and optionally silica; a cobalt salt; a tear strength agent; and a cure package including a sulfur-based curing agent.

The exemplary rubber composition provides low hysteresis to the carcass plies and/or other plies. As a result, a tire, e.g., a truck tire, formed with such plies has a low rolling resistance.

### The Elastomer Component

The exemplary rubber composition includes 100 phr of elastomer(s), including at least one conjugated diene elastomer. In one embodiment, at least 60 phr, or at least 80 phr, or at least 90 phr, or at least 95 phr, or up to 100 phr of the elastomer component is conjugated diene elastomer(s). In one embodiment, the conjugated diene elastomer is selected from natural rubber, a synthetic cis-1,4-polyisoprene, and mixtures thereof.

The glass transition temperature (Tg) of an elastomer or elastomer composition, where referred to herein, represents the glass transition temperature(s) of the respective elastomer or elastomer composition in its uncured state or possibly a cured state in the case of an elastomer composition. Tg values referred to herein are determined as a peak midpoint by a differential scanning calorimeter (DSC) at a temperature rate of increase of 10° C per minute, according to ASTM D3418-21, "Standard Test Method for Transition

Temperatures and Enthalpies of Fusion and Crystallization of Polymers by Differential Scanning Calorimetry."

Natural rubber is derived predominantly from isoprene (2-methyl-1,3-butadiene) and thus is predominantly (e.g., at least 99 wt.%) polyisoprene, particularly cis-1,4-polyisoprene. As used herein, the term "natural rubber" means naturally-occurring rubber, such as can be harvested from sources such as Hevea rubber trees and non-Hevea sources (e.g., guayule shrubs and dandelions such as TKS). In other words, the term "natural rubber" should be construed so as to exclude synthetic polyisoprene. Natural rubber produced from field grade coagulum (cuplump) from the Hevea brasiliensis tree is a common form of natural rubber. For example, technically specified or block rubber (TSR), is a natural rubber available from Indonesia, where it may be referred to as Standard Indonesian Rubber (SIR), Malaysia (SMR), and Thailand (STR). It can be obtained in a number of grades, including TSR 10 and TSR 20, with the TSR 10 grade being of higher purity.

In one embodiment, the rubber composition includes at least 60 phr of natural rubber, or at least 80 phr, or at least 90 phr, or at least 92 phr, or at least 95 phr, or at least 98 phr, or up to 100 phr of natural rubber.

Natural rubber is desirable for tear properties (high tear strength) of the cord reinforced rubber composite, low hysteresis (relatively high hot rebound property), and good processability. However, a small amount of synthetic polyisoprene aids green tack properties. Synthetic polyisoprene, in particular, cis-1,4-polyisoprene with a cis content of at least 94 wt. %, may be employed. The cis-1,4-content of the synthetic polyisoprene may be at least 96 wt. %. The Tg of the synthetic polyisoprene may be in a range of - 60°C to -70°C.

In one embodiment, synthetic polyisoprene is absent from the rubber composition. In another embodiment, the rubber composition includes at least 2 phr synthetic polyisoprene, or at least 3 phr, or at least 4 phr, or at least 6 phr, or at least 10 phr, or up to 20 phr synthetic polyisoprene.

Other elastomers which may be present, in a total amount of up to 40 phr, or up to 20 phr, or up to 10 phr may be selected from the homopolymerization products of butadiene and its homologues and derivatives, for example, methylbutadiene, dimethylbutadiene, and pentadiene and copolymers formed from butadiene or its homologues or derivatives with other unsaturated monomers. Among the latter may be acetylenes, for example, vinyl acetylene, olefins, for example, isobutylene, which copolymerizes with isoprene to form butyl rubber, vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of such synthetic rubbers include neoprene (polychloroprene), polybutadiene (including cis 1,4-polybutadiene), butyl rubber, halobutyl rubber, such as chlorobutyl rubber and bromobutyl rubber, styrene/isoprene/butadiene rubber, copolymers of 1,3-butadiene or isoprene with monomers such as styrene, acrylonitrile and methyl methacrylate, ethylene/propylene terpolymers, also known as ethylene/propylene/diene monomers (EPDM), and in particular, ethylene/propylene/dicyclopentadiene terpolymers. Additional examples of elastomers which may be used include alkoxy-silyl end functionalized solution polymerized polymers (SBR, PBR, IBR and SIBR), and silicon-coupled and tin-coupled star-branched polymers.

### Reinforcing fillers

In one embodiment, the rubber composition includes carbon black and silica as reinforcing fillers. These two fillers may be the only reinforcing fillers present in the rubber composition or one or more additional fillers may be present, such as up to 30 phr, or up to 20 phr, or up to 10 phr of other reinforcing fillers.

In one embodiment, a ratio, by weight, of carbon black to silica may be at least 0.8:1, or at least 3:1, or at least 4:1, or up to 5:1.

In another embodiment, silica is omitted.

### Carbon Black

Carbon blacks suited to use in rubber compositions can by characterized by various measures, including the following:
The Oil Absorption Number (OAN) is determined herein according to ASTM D2414-22, "Standard Test Method for Carbon Black-Oil Absorption Number (OAN)." In this method, OAN is expressed as the number of cubic centimeters of paraffin absorbed by 100 g of carbon black, following Procedure A, using the standard reference grade defined by the ASTM D24 Committee for normalization. The OAN value is proportional to the degree of aggregation of structure level of the carbon black.

The Oil Absorption Number of a Compressed sample (COAN) is determined according to ASTM D3493-21, "Standard Test Method for Carbon Black-Oil Absorption Number of Compressed Sample (COAN)." Using this method, COAN is expressed as the number of cubic centimeters of paraffin absorbed by 100 g of carbon black after being compressed four times in a compression cylinder at 165 MPa (24,000 psi) under specified conditions. The COAN value gives a measure of the stability of the structure of the carbon black.

The external surface area of carbon black may be measured by the statistical thickness method (STSA), which is defined as the specific surface area that is accessible to rubber. STSA is determined according to ASTM D6556-21, "Standard Test Method for Carbon Black-Total and External Surface Area by Nitrogen Adsorption."

The iodine adsorption number (I₂ No) is the number of grams of iodine adsorbed per kilogram of carbon black under specified conditions, as determined according to ASTM D1510-21, "Standard Test Method for Carbon Black-Iodine Adsorption Number."

The nitrogen surface area (NSA) is based on the BET method and is the total surface area of carbon black that is calculated from nitrogen adsorption data, as determined according to ASTM D6556-21, "Standard Test Method for Carbon Black-Total and External Surface Area by Nitrogen Adsorption".

Carbon blacks are often assigned an ASTM designation which is indicative of the degree of structure, as specified by ASTM D1765-21, "Standard Classification System for Carbon Blacks Used in Rubber Products." It has been found, however, that a carbon black which does not fall into one of the standard ASTM categories is particularly useful in forming a rubber composition suited to use in tire plies. This carbon black is referred to herein as an "intermediate" carbon black since it falls between two conventional ASTM grades with respect to the degree of structure.

In one embodiment, the carbon black includes or consists of at least one intermediate carbon black having a surface area (STSA) of at least 50 m²/g, or at least 55 m²/g, or at least 57 m²/g, or up to 70 m²/g, or up to 65 m²/g, or up to 62 m²/g, e.g., in a range of 55 to 65 m²/g or 57 to 62 m²/g. For example, the STSA may be in the range 59±3 m²/g, or 59±2 m²/g, or 59±1 m²/g. This surface area falls between ASTM D1765-21 carcass and tread grades. Such a carbon black may have a high structure, such as a COAN of at least 70 cc/100g, or at least 90 cc/100g, or at least 95 cc/100g, or up to 110 cc/100g, or up to 105 cc/100g. For example, the COAN may be in the range 98±3, or 98±2, or 98±1 cc/100g. The intermediate carbon black may have a wider aggregate size distribution than an ASTM D1765-21 N347 carbon black. The OAN of the intermediate carbon black may be at least 132 cc/100g, or at least 135 cc/100g, or up to 149 cc/100g, or up to 145 cc/100g. The Nitrogen Surface Area (NSA) of the intermediate carbon black may be at least 52 and/or up to 66. The iodine adsorption number (I₂ No) of the intermediate carbon black may be at least 48 and/or up to 62.

The rubber composition may include at least 20 phr of the intermediate carbon black, or at least 30 phr, or at least 35 phr, or up to 55 phr, or up to 45 phr or 40 ± 2 phr of the intermediate carbon black.

In one embodiment, the rubber composition includes one or more other grades of carbon black, in addition to the intermediate carbon black. In this embodiment, the intermediate carbon black may be at least 60 wt. %, or at least 70 wt. %, or at least 80 wt. %, or at least 90 wt. %, or at least 97 wt. %, or up to 100 wt. %, or up to 99 wt. % of all of the carbon black used in the rubber composition.

One exemplary carbon black suited to use as the intermediate carbon black has an STSA of about 59 m²/g and a COAN of about 98 cc/100g and is available as SR409 from Tokai Carbon CB, Ltd., formally known as Sid Richardson Carbon, Ltd. Other similar carbon blacks which may be used are described in U.S. Pat. No. 10,072,154.

In one embodiment, a mixture of carbon blacks may be employed in the rubber composition, such as a combination of the exemplary intermediate carbon black and one or more carcass grade carbon blacks, such as those ranging from ASTM designation N326 (low structure) to N347 (higher structure), as specified by ASTM D1765-21. In particular, ASTM designations N326, N330, N332, N339, N343, and N347, and mixtures thereof, may be employed. The intermediate carbon black may be at least 50 wt. % or at least 70 wt. %, or at least 90 wt. %, or up to 99 wt. % of such a mixture.

In one embodiment, a small amount, e.g., up to 3 phr, or up to 2 phr, or at least 1 phr of another carbon black is incorporated in the rubber composition as a carrier for another component, such as a silica coupling agent. This carbon black may be any suitable carbon black suited to this function.

The rubber composition may include, in total, at least 20 phr of all carbon blacks, or at least 30 phr, or at least 35 phr, or up to 60 phr, or up to 55 phr, or up to 48 phr, or 42 ± 2 phr of all carbon blacks.

### Silica

Another material which may be included in the rubber composition to provide reinforcement to the plies and internal components is silica. When used with carbon black, silica can minimize carbon black loading while lowering hysteresis and increasing tear resistance.

The rubber composition may include at least 5 phr of silica, or at least 6 phr of silica, or at least 8 phr, or at least 9 phr, or at least 10 phr, or up to 20 phr, or up to 15 phr, or up to 13 phr, or up to 12 phr of silica. The silica may be at least 12 phf, or at least 16 phf, or at least 20 phf, or up to 40 phf, or up to 30 phf, or up to 25 phf of the reinforcing fillers. In one embodiment, a ratio of the silica to the natural rubber is at least 0.05:1, and may be up to 0.2:1. In another embodiment, silica may be omitted from the rubber composition.

The silica may be amorphous (e.g., precipitated) silica and/or crystalline silica. The term "silica" is used herein to refer to silicon dioxide, SiOz (which may contain minor amounts of impurities, generally less than 1 wt. %, resulting from the process in which the silica is formed). The term "precipitated silica" is used to refer to synthetic amorphous silica, typically obtained by a process in which a silicate is precipitated with an acidifying agent.

The silica may be prepared by various methods. Precipitated silica may be prepared by digesting amorphous silica, e.g., found in rice husks or other biological wastes, with sodium hydroxide to form sodium silicate and precipitating silica from the sodium silicate by reaction with an acidifying agent, such as sulfuric acid or carbon dioxide. The resulting silica precipitate is washed and filtered. Methods for the preparation of precipitated silica are disclosed, for example, in U.S. Pat. Nos. 5,587,416 A, 5,800,608 A, 5,882,617 A, and 9,359,215 B2, and U.S. Pub. Nos. 20020081247 A1, and 20050032965 A1. Precipitated silica may also be formed from silica gel as described, for example, in U.S. Pat. Nos. 5,708,069, 7,550,610, and 5,789,514. Silica gels may be derived, for example, by hydrophobating a silica hydrogel with, for example, an organomercaptosilane and alkyl silane and drying the product.

The surface area of silica can be measured in various ways. One method is through nitrogen adsorption in accordance with ASTM D1993-18, "Standard Test Method for Precipitated Silica-Surface Area by Multipoint BET Nitrogen Adsorption," which is referred to herein as nitrogen surface area. Another method is in accordance ASTM D6845-20, "Standard Test Method for Silica, Precipitated, Hydrated-CTAB (Cetyltrimethylammonium Bromide) Surface Area," which is referred to herein as CTAB surface area. The CTAB molecule is relatively large; so it is not adsorbed in micropores or on surface roughness. Thus, the CTAB surface area reflects only the surface of the silica that is available for interaction with rubber molecules.

Carcass plies often use medium nitrogen surface area silica, e.g., of about 160 m²/g. To improve tear resistance, without lowering stiffness, a high surface area silica may be employed in the rubber composition. In an exemplary embodiment, the high surface area silica has a CTAB surface area of at least 220 m²/g, or at least 240 m²/g, or at least 250 m²/g, or up to 350 m²/g, or up to 300 m²/g. The high surface area silica may be the only silica present in the rubber composition or may be at least 60 wt.%, or at least 80 wt. % or at least 90 wt. %, or up to 98 wt. %, or up to 95 wt. % of the total silica.

An exemplary high surface area silica is available as Zeosil^{™} Premium SW from Solvay. This silica has a CTAB surface area of about 250 m²/g.

Alternatively, or additionally, silica with a lower CTAB surface area, e.g., of below 220 m²/g, such as 120-180 m²/g, may be used in the rubber composition. Examples of such precipitated silicas include Hi-Sil^{™} 532, Hi-Sil^{™} 532 EP, and Hi-Sil^{™} EZ 160G from PPG Industries; Hubersil^{™} 4155 from the J. M. Huber Company; Zeosil^{™}, under the designations 115GR, 125GR, 165GR, 175GR, 185GR, 195GR, 1085GR, 1165MP, 1115MP, HRS 1200MP, Premium MP, Premium 200MP, and 195HR from Solvay; UltrasilT^{™}, under the designations VN2, VN3, VN3GR, 5000GR, 7000GR, 9000GR from Evonik; Zeopol^{™}, under the designations 8755LS and 8745 from Evonik; Newsil^{™}, under the designations 115GR and 2000MP, from Wuxi Quechen Silicon Chemical Co., Ltd; and Tokusil^{™} 315 from Maruo Calcium Co., Ltd.

The silica may have been surface treated, e.g., with a coupling agent and/or a dispersing aid, prior to incorporating the pretreated silica into the rubber composition to enhance dispersion and/or adherence to the elastomers. In another embodiment, the silica may be treated with the coupling agent and/or dispersing aid in situ, within the rubber composition, e.g., prior to addition of the curing agent.

Using a silica coupling agent in combination with precipitated silica can promote low hysteresis and good tear strength for the rubber composition. Suitable coupling agents generally include a first moiety, that is reactive with hydroxyl groups (e.g., silanol groups) that are present on the surface of precipitated silica, and a second moiety capable of reacting with a diene-based elastomer, such as natural rubber and/or synthetic polyisoprene rubber. The two moieties are connected by a linking group, e.g., a hydrocarbyl or sulfidic bridge, such that the precipitated silica is chemically bonded to the elastomer. Examples of silica coupling agents include those containing groups such as alkyl, alkoxy, mercapto, blocked mercapto, sulfide-containing (e.g., monosulfide-based alkoxy-containing, disulfide-based alkoxy-containing, tetrasulfide-based alkoxy-containing), amino, vinyl, epoxy, and combinations thereof.

Specific examples of silane coupling agents include alkoxyorganomercaptosilanes and bis(3-triethoxysilylpropyl)polysulfide containing an average of from 1 to 5 connecting sulfur atoms (preferably 2 to 4) in its polysulfidic bridge. Bis(3-triethoxysilylpropyl)polysulfide having an average of from 2 to 2.6 and from 3.4 to 3.8, respectively, connecting sulfur atoms in its polysulfidic bridge may be obtained as Si266^{™} and Si69^{™} from Evonik Industries.

The rubber composition may include at least 0.1 phr, or at least 0.5 phr or at least 1 phr, or up to 6 phr, or up to 3 phr, or up to 2 phr of the silica coupling agent. The silica coupling agent may be present in an amount sufficient to provide a ratio, by weight, of the total amount of coupling agent to silica filler of at least 0.1:100, or at least 1:100, or at least 2:100, or up to 25:100, or up to 20:100, or up to 8:100. When the silica is pretreated with the coupling agent, lower amounts of coupling agent may be used than when the silica is treated in situ with the coupling agent. Where silica is omitted from the rubber composition, the silica coupling agent may also be omitted.

Examples of silica dispersing aids include glycols, such as fatty acids, diethylene glycols, alkylene glycols such as polyethylene glycols and polypropylene glycols, fatty acid esters of hydrogenated or non-hydrogenated C₅ or C₆ sugars, polyoxyethylene derivatives of fatty acid esters of hydrogenated or non-hydrogenated C₅ or C₆ sugars, and mixtures thereof. Exemplary fatty acids include stearic acid, palmitic acid, and oleic acid. Exemplary fatty acid esters of hydrogenated and non-hydrogenated C₅ and C₆ sugars (e.g., sorbose, mannose, and arabinose) include sorbitan oleates, such as sorbitan monooleate, dioleate, trioleate and sesquioleate, and sorbitan esters of laurate, palmitate, and stearate fatty acids. Exemplary polyoxyethylene derivatives of fatty acid esters of hydrogenated and non-hydrogenated C₅ and C₆ sugars include polysorbates and polyoxyethylene sorbitan esters, which are analogous to the fatty acid esters of hydrogenated and non-hydrogenated sugars except that ethylene oxide groups are placed on each of the hydroxyl groups.

Exemplary polyalkylene oxides may have a weight average molecular weight Mw of at least 500, such as at least 2,000, or at least 4,000, or up to 15,000, or up to 12,000, or up to 10,000, or up to 8,500. In cases where polyalkylene oxide, e.g., polyethylene glycol, is utilized in the rubber composition, it may be included in an amount of at least 0.1 phr, such as at least 0.2 phr, or at least 0.3 phr, or up to 5 phr, or up to 3 phr, or up to 2 phr, or up to 1 phr, or up to 0.6 phr.

Examples of commercially available polyethylene glycols include Carbowax^{™} PEG 3350 and Carbowax^{™} PEG 8000 from the Dow Chemical Company where the number indicates an approximate weight average molecular weight. Other polyalkylene oxide polymers may be used, as described, for example, in U.S. Pat. Nos 6,322,811 and 4,082,703.

Silica dispersing aids, if used, may be present in a total amount of at least 0.1 wt. %, based on the weight of the silica, or at least 0.5 wt. %, or at least 1 wt. %, or up to 25 wt. %, or up to 20 wt. % or up to 15 wt. %.

In some embodiments, the silica may be pre-hydrophobated, prior to its addition to the rubber composition, by treatment with a silane, such as an organomercaptosilane, an alkyl silane, a halogenated alkyl silane, or a mixture thereof. Examples of suitable silanes include trichloromethylsilane, dichlorodimethylsilane, chlorotrimethylsilane, trimethoxymethylsilane, dimethoxydimethylsilane, methoxytrimethylsilane, trimethoxypropylsilane, trimethoxyoctylsilane, trimethoxyhexadecylsilane, dimethoxydipropylsilane, triethoxymethylsilane, triethoxypropylsilane, triethoxyoctylsilane, diethoxydimethylsilane, triethoxymercaptopropylsilane, trimethoxymercaptopropylsilane, methyldimethoxymercaptopropylsilane, methyldiethoxymercaptopropylsilane, dimethylmethoxymercaptopropylsilane, triethoxymercaptoethylsilane, tripropoxymercaptopropylsilane, and mixtures thereof.

For example, precipitated silica is pre-hydrophobated by treating silica in an aqueous colloidal form with both an organomercaptosilane and an alkylsilane in a weight ratio of organomercaptosilane to alkylsilane in a range of from 10:90 to 90:10, as described, for example, in U.S. Pat. No. 11,441,019 B2. Hydrophobated precipitated silica aggregates may be recovered from the treated colloidal silica, for example as a treated silica hydrosol, by addition of acid to the treated colloidal silica (e.g., sulfuric acid or hydrochloric acid), followed by water washing and drying the recovered hydrophobated silica as a hydrophobated silica gel or as a hydrophobated precipitated silica.

In one embodiment, the rubber composition contains a combination of a silica coupling agent, such as bis(3-triethoxysilylpropyl)polysulfide containing an average of from 2 to 4 connecting sulfur atoms in its polysulfidic bridge, and a precipitated silica that has not been pre-silanized, e.g., in a ratio of pre-silanized silica to non-pre-silanized precipitated silica of at least 8:1, or at least 10:1.

### Other Reinforcing Fillers

Additional reinforcing fillers, other than the silica and the carbon black, may be utilized, e.g., in total amounts of up to 30 phr, or up to 20 phr, or up to 10 phr, or up to 1 phr, or may be absent. Examples of such additional reinforcing fillers include calcium carbonate, alumina, aluminum hydroxide, clay (reinforcing grades), magnesium hydroxide, boron nitride, aluminum nitride, titanium dioxide, reinforcing zinc oxide, and combinations thereof.

### Tear Strength Agent

A tear strength agent is a material that helps to provide improvements in tear strength of the rubber composition. The rubber composition may include at least 0.1 phr, or at least 0.5 phr, or up to 3 phr, or up to 2 phr, or up to 1.2 phr, or up to 1 phr of the tear strength agent.

Examples of tear strength agents include nitrogen-containing organic compounds, such as those of formulae (1) to (8), and mixtures thereof: 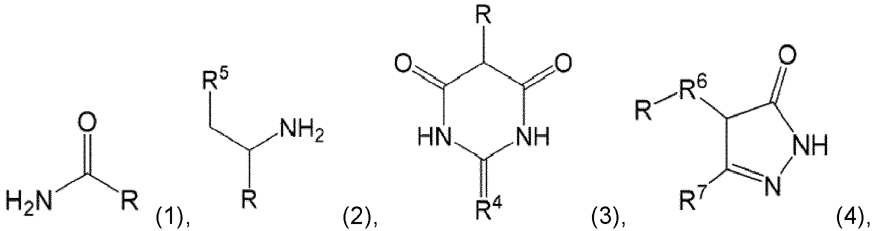 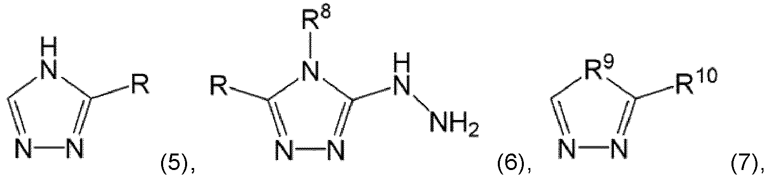 and

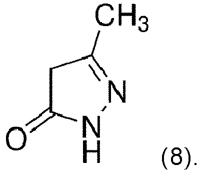

In the formulae, R represents a hydrazide group, an N'-alkylidene hydrazide group, an N-allyl carbamoyl group, a 3-carboxyl acryloyl group, a hydrazine carboxyamino group, a thiocarboxyl group, a thiol group, or a hydrogen atom. R⁴ is a sulfur atom or an oxygen atom. R⁵ is a thiol group or a hydroxy group. R⁶ is an alkylene group having 1 to 4 carbon atoms. R⁷ is an alkyl group, an aralkyl group, or a heterocyclic group. R⁸ is a hydrogen atom or an amino group. R⁹ is a hetero atom. R¹⁰ is a heterocyclic group.

In one embodiment, the tear strength agent includes a heterocyclic ring containing more than one nitrogen atom. For example, the tear strength agent may include 3-methyl-5-pyrazolone (Formula (8), which is available as Acroad^{™} EN-01 from Otsuka Chemical Co., Ltd.

### Cobalt Salt

In one embodiment, the rubber composition includes a cobalt salt. The rubber composition may include at least 0.1 phr, or at least 0.2 phr, or at least 0.3 phr, or up to 5 phr, or up to 2 phr, or up to 1 phr, or up to 0.6 phr of the cobalt salt.

In ply coatings, the cobalt salt can improve the adhesion of the rubber coating to the ply material, in particular if such material is metal, e.g., a brass coated metal, such as steel. Cobalt salts tend to promote high low-strain stiffness values (as evidenced by G' at 10 % strain at 100° C).

In one embodiment, the cobalt salt is an organic salt of cobalt. Examples of organic cobalt salts include cobalt salts of fatty acids and cobalt salts of an aliphatic or alicyclic carboxylic acids containing from 6 to 30 carbon atoms. Examples of such cobalt salts include cobalt naphthenate, cobalt octanoate, cobalt linoleate, cobalt stearate, cobalt oleate, cobalt acetate, cobalt neodecanoate, cobalt tallate, cobalt resinate, cobalt acetonate, in situ salts prepared from cobalt hydroxide and an organic acid such as naphthenic acid, stearic acid, oleic acid, acetic acid, linoleic acid, cobalt-boron complex salts, cobalt-aluminum complex salts. and mixtures thereof. Examples of complex salts containing aluminum and/or boron linked to a divalent cobalt through oxygen atoms and containing at least one acyloxy radical attached to cobalt, include those of the general formula X-Co-[O-T(Y)]ₘ-[O-Co]ₙ-Y, where X is an acyloxy radical, T is selected from boron and aluminum, Y is an alkoxy or acyloxy radical, m is at least 1, and n is 0 or 1. Methods of preparing complex cobalt salts of this type are described, for example, in U.S. Pat. No. 3,296,242A.

Cobalt boron complex organic salts which may be used are available as Manobond^{™} C from Borchers Americas, Inc., and cobalt boro-neodecanoate, available as Comend^{™} from Shepherd Chemical.

In another embodiment, the cobalt salt is an inorganic salt, such as cobalt chloride.

In another embodiment, the rubber composition may be essentially cobalt free, i.e., include less than 0.1 phr, or less than 0.05 phr, or 0 phr of cobalt salt.

### Other Compounding ingredients

The rubber composition may include additional components such as antidegradants, processing aids, peptizing agents, sulfur-based curing agents, activators, cure accelerators, and cure retardants.

The rubber composition may include at least 0.1 phr, or at least 1 phr, or at least 2 phr, or up to 10 phr, or up to 8 phr, or up to 5 phr of antidegradants, such as antiozonants and/or antioxidants. These compounds assist in protecting the tire against oxidation and ozonation. Representative antidegradants include monophenols, bisphenols, thiobisphenols, polyphenols, hydroquinone derivatives, phosphites, phosphate blends, thioesters, naphthylamines, diphenol amines as well as other diaryl amine derivatives, para-phenylene diamines, quinolines, and blended amines. Exemplary antioxidants include 2,2,4-trimethyl-1,2-dihydroquinoline (TMQ), diphenyl-p-phenylenediamine (PPD), N-(1,3-dimethylbutyl)-N'-phenyl-p-phenylenediamine (6PPD), and others, such as those disclosed in The Vanderbilt Rubber Handbook (1978), pages 344 346.

Exemplary processing aids include liquid plasticizers, waxes, resins, and combinations thereof. Liquid plasticizers, such as processing oils, have a Tg that below 0°C, generally well below, such as less than -30°C, or less than -40°C, or less than - 50°C, such as a Tg of 0°C to -100°C. Processing oil, in relatively low concentrations, aids in mixing the ingredients for the rubber composition and/or promotes the processing of the rubber composition. Representative processing oils which may be used in the rubber composition include aliphatic oils, aromatic oils, naphthenic oils, triglyceride oils, low polycyclic aromatics (PCA) oils, such as mild extract solvate (MES), treated distillate aromatic extract (TDAE), special residual aromatic extract (SRAE), and heavy naphthenic oils, and mixtures thereof. Triglyceride oils that can be used include vegetable oils, such as castor oil, soybean oil, canola oil (rapeseed oil), corn oil, cottonseed oil, olive oil, palm oil, safflower oil, sunflower oil, coconut oil, and peanut oil. Castor oil is a triglyceride oil that contains approximately 87 wt. % ricinoleic acid, 7 wt. % oleic acid, 3 wt. % linoleic acid, 2 wt. % palmitic acid, and 1 wt. % stearic acid. Example naphthenic processing oils include Hyprene^{™} 100 from Ergon Refining, Inc., and Tufflo 100^{™} from the Barton Solvent Company. The processing oil(s) may be used in the rubber composition at from 0 to 30 phr, such as at least 0.5 phr, or at least 1 phr, or up to 10 phr, or up to 7 phr, or up to 5 phr, or up to 3 phr. In some embodiments, an oil may be used as a carrier for one or more other components, such as for the elemental sulfur.

Exemplary resins which may be used in the rubber composition are generally solid or viscous at room temperature and include tackifying resins, such as unreactive phenol formaldehyde, and stiffness resins, such as reactive phenol formaldehyde resins and resorcinol or resorcinol and hexamethylene tetramine, hexa(methoxymethyl) melamine (HMMM) resins, benzoxazine resins, and hydrocarbon resins. Example hydrocarbon resins include aromatic, aliphatic, and cycloaliphatic resins.

In one embodiment the rubber composition includes 1 to 10 phr of resin. In another embodiment, the rubber composition is free or substantially free of resin. This is a benefit because resins can constitute potential threats to environment, health, and safety during mixing and/or tire manufacturing. Thus, identifying compositions with good adhesion and/or stiffness properties while avoiding resins is of interest. In particular, the amount of resin in the composition may be less than 1 phr, or less than 0.5 phr, or less than 0.2 phr or 0 phr.

Suitable waxes, particularly microcrystalline waxes, may be of the type described in The Vanderbilt Rubber Handbook (1978), Pages 346 and 347. Waxes may be absent from the rubber composition or composition or used in an amount of at least 1 phr or up to 5 phr.

Exemplary peptizing agents include pentachlorophenol dibenzamidodiphenyl disulfide. Peptizing agents may be absent from the rubber composition or used in an amount of at least 0.1 phr, or up to 1 phr, or up to 0.4 phr.

Exemplary sulfur-based curing agents include elemental sulfur (free sulfur) and sulfur-donating curing agents, such as amine disulfides, polymeric polysulfides, and sulfur olefin adducts. The amount of sulfur-based curing agent may vary, depending on the type of rubber and particular type of curing agent, but may range from 0.1 phr to 10 phr, such as at least 0.5 phr, or at least 1 phr, or at least 2 phr, or up to 8 phr, or up to 6 phr.

Exemplary activators for sulfur curing agents include fatty acids and zinc oxide. The zinc oxide may help to improve adhesion between metal wire and the coating rubber compound upon sulfur curing. The rubber composition may include from 1 phr to 20 phr of zinc oxide, such as at least 5 phr, or at least 7 phr, or up to 15 phr, or up to 12 phr, or up to 10 phr of zinc oxide. Exemplary fatty acids include stearic acid and mixtures of stearic acid with other fatty acids. The rubber composition may include from 0.5 phr of fatty acid, such as at least 0.7 phr, or at least 1 phr, or at least 1.2 phr, or up to 10 phr, or up to 5 phr, or up to 2 phr of fatty acid.

Accelerators may be used to control the time and/or temperature required for vulcanization and to improve the properties of the vulcanizate. The accelerator may be at least 0.2 phr, or at least 0.5 phr, or at least 1 phr, or up to 5 phr, or up to 3 phr in the rubber composition.

Exemplary accelerators for the sulfur-based curing agent include amines, guanidines, thioureas, thiols, thiazoles, thiurams, sulfenamides, dithiocarbamates and xanthates. Examples of thiazole cure accelerators include 2-mercaptobenzothiazole, 2,2'-dithiobis(benzothiazole) (MBTS), N-cyclohexyl-2-benzothiazole-sulfenamide (CBS), and N-tert-butyl-2-benzothiazole-sulfenamide (TBBS), guanidine vulcanization accelerators, such as diphenyl guanidine (DPG), and mixtures thereof. In one embodiment, a single accelerator system may be used, i.e., primary accelerator. In other embodiments, a primary accelerator is used in combination with a secondary accelerator, with the primary accelerator becoming active at a lower temperature than the secondary accelerator, but losing its activity quicker. The secondary accelerator may be used in a smaller amount than the primary accelerator. The primary accelerator may be a sulfenamide and the secondary accelerator may be a guanidine, dithiocarbamate, or thiuram compound, such as diphenyl guanidine.

As will be appreciated, the rubber composition may include other ingredients than those exemplified herein.

Table 1 illustrates exemplary rubber compositions, expressed in phr. All ingredients are expressed on an actives basis (i.e., not including diluents, carriers).

**TABLE 1: Example Rubber Compositions**

| Component | Example 1 | Example 2 | Example 3 |
|---|---|---|---|
| cis 1,4 Polyisoprene, e.g., Natural Rubber and/or synthetic polyisoprene | 60-100 | 90-100 | 95-100 |
| Other elastomers | 0-40 | 0-10 | 0-5 |
| Intermediate Carbon Black | 20-60 | 35-45 | 38-42 |
| Silica, e.g., CTAB surface area of at least 220 m²/g | 0-20 or 6-20 | 6-15 | 9-12 |
| Tear strength agent, e.g., 3-methyl-5-pyrazolone | 0.1-3 | 0.3-2 | 0.5-1 |
| Silica coupling agent | 0-6 or 0.1-6 | 0.2-3 | 0.5-2 |
| Cobalt salt | 0.1-5 | 0.2-1 | 0.3-0.6 |
| Antidegradant | 0.1-10 | 1-8 | 2-5 |
| Oil, e.g., naphthenic, paraffinic, synthetic, and/or vegetable | 0-30 | 0.5-10 | 1-7 |
| Fatty Acid(s) | 0.5-10 | 0.7-5 | 1-2 |
| Zinc oxide | 1-20 | 5-15 | 7-12 |
| Sulfur-based curing agent, e.g., elemental sulfur | 0.1-10 | 1-10 | 2-6 |
| Cure accelerator | 0.2-5 | 0.5-5 | 1-3 |
| Other components | 0-20 | 0-5 | 0-2 |
| Total phr | 139-292 | 153-220 | 163-195 |

### Forming the rubber composition

The various components of the rubber layer can be mixed together using convenient rubber mixing equipment, such as an internal rubber mixer. In general, the elastomers, e.g., butyl rubber and natural rubber, are blended in at least one non-productive mixing stage, in the absence of the curing agent followed by a final, or productive, mixing stage in which the curing agent (and possibly one or more of the additional ingredients) is added. In the productive mixing stage, the mixing typically occurs at a temperature, or ultimate temperature, lower than the mixing temperature(s) used in the preceding non-productive mix stage(s).

In one embodiment, in a first, non-productive stage (or stages), the components, other than the sulfur-based curing agent, are stirred in a mixer set at a suitable temperature, such as at least 100°C, or at least 110°C, or up to 165 °C. The temperature of the mixture rises as it is stirred. When the temperature reaches 150°C - 165°C, the mixture is dropped from the mixer and allowed to cool before returning it to the mixer. In a second, productive stage, the mixture is returned to the mixer with the curing agent for from 2 to 30 minutes, to incorporate the curing agent into the mixture, but without appreciably curing the mixture.

Vulcanization of a pneumatic tire incorporating the rubber composition may carried out at a temperature of 100° C to 200° C, such as from 110° C to 180° C. Any of the usual vulcanization processes may be used such as heating in a press or mold, heating with superheated steam or hot air. Such tires can be built, shaped, molded and cured by various methods which are known and will be readily apparent to those having skill in such art.

The rubber composition typically has sufficient viscosity and unvulcanized tack to enable its incorporation into an unvulcanized tire without significantly departing from conventional tire building techniques. In one embodiment, strips of the rubber composition are formed.

### Tire Construction

To form a cord-reinforced rubber component, such as a ply, a plurality of cords, arranged generally in parallel, are coated with the rubber composition, prior to curing the rubber composition. The coated cords may be passed through a calender which applies pressure and optionally heat to provide the ply with relatively smooth upper and lower surfaces defined by the rubber composition.

A ply or plies, formed of the rubber composition described above, may be built into an unvulcanized tubeless pneumatic rubber tire prior to undergoing vulcanization. In another aspect of the invention a tire is provided, including the vulcanized rubber composition.

In one embodiment, the tire includes a ply, e.g., one or more of a belt ply, a carcass ply, an overlay ply (covering one or more belt plies), and a ply strip (which may be spirally wound in a circumferential direction of the tire). The ply comprises the exemplary rubber composition, e.g., in the form of a rubber coating added to a textile or wire material. The ply may be formed in a calender device (e.g., a wire calender or textile calender). The coating comprises or consists of the rubber composition in accordance with one or more of its embodiments described herein.

The tire containing plies formed of the exemplary rubber composition may be a race tire, passenger tire, aircraft tire, agricultural tire, earthmover tire, off-the-road tire, truck tire, or the like. The tire may be a radial or bias-type tire. In one embodiment, the tire is a pneumatic radial (medium) truck tire.

Without intending to limit the scope of the exemplary embodiment, the following examples illustrate rubber compositions and their properties.

### EXAMPLES

Rubber compositions are prepared in a Banbury mixer using three separate stages of addition, with two non-productive mixing stages, for total of 4 minutes to a temperature of 150 °C. The second non-productive stage is followed by a productive mixing stage for 2 minutes to a temperature 105 °C where sulfur and curatives are added.

Table 1 shows amounts of components of the example rubber compositions, expressed in phr.

Example A uses a carbon black with a relatively high STSA. Example B incorporates 40 phr of an intermediate carbon black in place of the higher STSA carbon black of Example A, a lower loading of silica, and a higher loading of accelerator. Example C corresponds to Example B, but with higher surface area silica. Example D corresponds to Example C, but with the addition of a tear strength agent. Example E corresponds to Example B, but with the addition of a tear strength agent.

Amounts of natural rubber, silica coupling agent, antidegradants, zinc oxide, and sulfur are the same for each example. Small differences in the amounts of oil, fatty acid, and cobalt salt are not considered significant.

**TABLE 2 - Rubber Compositions (phr)**

| Component | Ex. A | Ex. B | Ex. C | Ex. D | EX. E |
|---|---|---|---|---|---|
| Natural Rubber (cis 1,4 Polyisoprene) | 100 | 100 | 100 | 100 | 100 |
| Carbon Black¹ | 45 | | | | |
| Intermediate Carbon Black² | | 40 | 40 | 40 | 40 |
| Silica³ | 14 | 10 | | | 10 |
| Silica⁴, high surface area | | | 10 | 10 | |
| Tear strength agent⁵ | | | | 0.6 | 1 |
| Silica coupling agent⁶ | 1.5 | 1.5 | 1.5 | 1.5 | 1.5 |
| Carbon black (as carrier for coupling agent) | 1.5 | 1.5 | 1.5 | 1.5 | 1.5 |
| Antidegradants⁷ | 4.5 | 4.5 | 4.5 | 4.5 | 4.5 |
| Oil⁸ | 2 | 1.4 | 1.9 | 1.9 | |
| Fatty acid⁹ | 1 | 0.75 | 1.5 | 1.5 | 0.75 |
| Zinc oxide | 8 | 8 | 8 | 8 | 8 |
| Cobalt Salt¹⁰ | 0.75 | 0.5 | 0.5 | 0.5 | 0.5 |
| Accelerator¹¹ | 0.75 | 2 | 2 | 2 | 2 |
| Sulfur-based curing agent¹² | 5.2 | 5.2 | 5.2 | 5.2 | 5.2 |
| Oil associated with sulfur curing agent | 1.3 | 1.3 | 1.94 | 1.95 | 1.3 |
| Silica associated with sulfur curing agent | - | - | 0.6 | 0.6 | |
| Total phr To be confirmed | 185.5 | 176.65 | 179.14 | 179.75 | 176.25 |

| | | | | | |
|---|---|---|---|---|---|
| ^{1.} ASTM grade N347, COAN about 99 cm³/100g, STSA about 83 m²/g. ^{2.} SR409^{™} carbon black from Tokai Carbon CB, Ltd. ^{3.} Amorphous precipitated silica, Highly Dispersible Silica (HDS), obtained as Hi-Sil^{™}EZ160G from PPG, having CTAB of 160 m²/g. ^{4.} Amorphous high surface area precipitated silica, obtained as Zeosil^{™} Premium SW from Solvay, with a CTAB surface area of 250 m²/g. ^{5.} 3-methyl-5-pyrazolone, obtained as Acroad^{™} EN-01 from Otsuka Chemical Co., Ltd. ^{6.} bis(3-triethoxysilylpropyl) polysulfide, obtained as Si69^{™} from Evonik Industries. ^{7.} Mixture of dihydroquinoline with one or more phenylene diamine-based antioxidants. ^{8.} Rubber processing oil including naphthenic oil. ^{9.} Primarily stearic acid (at least 90% stearic acid) as a blend of stearic, palmitic, and oleic acids. ^{10.} Cobalt neodecanoate salt, 20.5 wt.% cobalt. ^{11.} Sulphenamide. ^{12.} Elemental sulfur. Examples A, B and E use Crystex^{™}HDOT20 from Flexus, which incorporates a carrier oil (noted separately in Table 2), while Examples C and D use Crystex^{™} OT33AS, which incorporates a carrier oil and silica (noted separately in Table 2) | | | | | |

Rubber compositions are formed into test samples and are cured for 32 minutes to a temperature 150 °C. The following tests are performed on the cured strips:
A rubber process analyzer (RPA), RPA2000 from Alpha Technologies, is used to obtain values for the Storage Modulus G' at 10% strain (MPa) at a temperature of 100°C, in accordance with ASTM D5289-19a, "Standard Test Method for Rubber Property-Vulcanization Using Rotorless Cure Meters." Tangent Δ values (the ratio of G" to G') are also obtained.

Tear strength data is obtained by a peel strength adhesion test to determine interfacial adhesion between two samples of a rubber composition. Interfacial adhesion is determined by pulling one rubber composition away from the other at a right angle to the untorn test specimen with the two ends of the rubber compositions being pulled apart at a 180° angle to each other using an Instron instrument according to DIN 53539, 1979 Edition, September 1979.

Wire cord adhesion data is determined according to ASTM D2229-10(2014), "Standard Test Method for Adhesion Between Steel Tire Cords and Rubber." For this test, a block of the rubber composition is formed in a Four-Cavity Steel Cord Adhesion Mold fitted with steel cores. This test method covers the determination of the force required to pull a steel cord from the block of vulcanized rubber.

Wire cord adhesion coverage is determined by visual observation (higher is better).

Elongation at break (%) is determined with an Automated Testing System instrument by the Instron Corporation, in accordance with ASTM D412-06ae2, "Standard Test Methods for Vulcanized Rubber and Thermoplastic Elastomers-Tension."

Rebound resilience is measured on a ZwickRoell^{™} 5109 rebound resilience tester according to DIN 53512, April 2000, "Determination the rebound resilience of rubber using the Schob pendulum," at given temperature (100°C).

The physical properties of the rubber compositions are shown in Table 3.

**TABLE 3: Properties of Rubber Compositions (Normalized to 100 for Example A)**

| Test | Ex. A | Ex. B | Ex. C | Ex. D | | Ex. E |
|---|---|---|---|---|---|---|
| G'(10% strain) MPa | 100 | 89 | 95 | 103 | | 124 |
| Tan Δ at 10% strain | 100 | 81 | 52 | 51 | | 82 |
| Rebound (100 °C), % | 100 | 116 | 117 | 117 | | 115 |
| Tear Strength, N/mm | 100 | 17 | 89 | 118 | | 34 |
| Elongation at Break, % | 100 | 88 | 99 | 105 | | 103 |
| Wire Cord Adhesion 10-day Water aged, N | 100 | 90 | 86 | 133 | | 110 |
| Wire cord Adhesion coverage, % | 100 | 142 | 117 | 150 | | 150 |

Example B, with 40 phr of SR409 carbon black in place of 45 phr of N347 carbon black, has lower hysteresis (low Tan Δ) and high Rebound than Example A, but with lower tear and elongation. Lower loading of this intermediate carbon black, compared to N347 carbon black is found to achieve a lower hysteresis, while an increase in the amount of the sulfenamide accelerator provides an increase in stiffness.

Example C, with SR409 carbon black and Zeosil^{™} Premium SW silica in place of Hi-Sil^{™} silica shows an improvement in stiffness, with significantly lower Tan Δ and improvements in tear strength and elongation, but with lower wire cord adhesion than Example B.

Example D, with SR409 carbon black, Zeosil^{™} Premium SW silica, and tear strength agent, EN-01, shows an increase in stiffness, with similar Tan Δ to Example C, improves tear, and provides a significant increase in aged wire adhesion.

Example E, with SR409 carbon black, a low surface area silica, and a tear strength agent, performed better, in general than a similar sample, Example B (without tear strength agent).

The small amount of silica incorporated with the sulfur curing agent in Examples C and D is not expected to have an impact on the properties of the rubber composition. The increase in oil for Examples C and D is also not expected to have a significant impact on the properties of the rubber composition.

Achieving low rolling resistance in commercial wire coat compound can be difficult without impacting durability indicators. The exemplary intermediate carbon black in a natural rubber formulation, particularly when used in combination with a high surface area silica and a tear strength agent, has been shown to balance these tradeoffs. For example, Example D samples have a rebound of 78%, elongation of 434%, tear strength of 17 N/mm and water aged wire adhesion of 837 N. Without the tear strength agent (Example C), there is no impact to rebound, but tear decreases to 13 N/mm and water aged adhesion to 537 N.

Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated. It is to be understood that the upper and lower amount, range, and ratio limits set forth herein may be independently combined. Similarly, the ranges and amounts for each element of the invention may be used together with ranges or amounts for any of the other elements.

## Claims

1. A rubber composition comprising:
100 phr of elastomer, the elastomer comprising 60-100 phr of a conjugated diene elastomer;
at least 20 phr of carbon black, the carbon black having a statistical thickness surface area (STSA), as determined according to ASTM D6556-21, of from 50 m²/g to 70 m²/g;
at least 5 phr silica;
a sulfur-based curing agent;
an accelerator for the curing agent; and
optionally at least 0.1 phr of a tear strength agent.

2. The rubber composition of claim 1, wherein the carbon black has at least one of an STSA of at least 55 m²/g and an STSA of up to 65 m²/g.

3. The rubber composition of claim 1 or 2, wherein the carbon black has at least one of an Oil Absorption Number (OAN) of at least 132 cc/100g, as determined according to ASTM D2414-22, and an OAN of up to 149 cc/100g.

4. The rubber composition of at least one of the previous claims, wherein the carbon black has an Oil Absorption Number of a Compressed sample (COAN) as determined according to ASTM D3493-21 of at least 90 cc/100g, or at least 95 cc/100g, or up to 110 cc/100g, or up to 105 cc/100g.

5. The rubber composition of at least one of the previous claims, wherein the rubber composition comprises at least 8 phr of silica and/or wherein a ratio by weight of carbon black to silica is at least 3:1.

6. The rubber composition of at least one of the previous claims, wherein the silica has a CTAB surface area of at least 220 m²/g.

7. The rubber composition of at least one of the previous claims, further comprising at least 0.1 phr of a silica coupling agent and/or at least 0.1 phr of a cobalt salt.

8. The rubber composition of at least one of the previous claims, wherein the rubber composition comprises said tear strength agent and said tear strength agent is or comprises 3-methyl-5-pyrazolone.

9. The rubber composition of at least one of the previous claims, further comprising at least 1 phr of zinc oxide and/or at least 0.5 phr of a fatty acid.

10. A cord-reinforced rubber component for a tire, preferably a tire ply, the cord-reinforced rubber component comprising at least one cord or a plurality of cords encapsulated by the rubber composition in accordance with at least one of the previous claims.

11. The cord-reinforced rubber component of claim 10, wherein the cords each comprise at least one of metal wires and a fabric material.

12. A tire comprising the cord-reinforced rubber component of claim 10 or 11.

13. A method of forming a cord-reinforced rubber component, the method comprising:
forming a rubber composition comprising combining 100 phr of elastomer, the elastomer comprising 60-100 phr of a conjugated diene elastomer, at least 30 phr of a carbon black, the carbon black having a statistical thickness surface area (STSA) of from 50 m²/g to 70 m²/g as determined according to ASTM D6556-21, a sulfur-based curing agent, an accelerator for the curing agent, and optionally at least 0.1 phr of a tear strength agent;
coating at least one cord with the rubber composition; and
curing the rubber composition coating the at least one cord to form the cord-reinforced rubber component.

14. The method of claim 13, further comprising assembling uncured components of a tire, the components of the tire comprising a tire tread and the cord-reinforced rubber component.

15. A ply of a tire formed by coating a plurality of cords with a rubber composition and curing the rubber composition, the rubber composition comprising:
100 phr of elastomer comprising 60-100 phr cis 1,4 polyisoprene;
20 to 60 phr of a carbon black, preferably a carbon black having a statistical thickness surface area (STSA) of from 50 m²/g to 70 m²/g as determined according to ASTM D6556-21;
6 to 20 phr silica having a CTAB surface area of at least 220 m²/g;
0.1 to 6 phr of a silica coupling agent;
0.1 to 3 phr of a tear strength agent;
0.1 to 5 phr of a cobalt salt;
0.1 to 10 phr of an antidegradant;
0.5 to 10 phr of a fatty acid;
1 to 20 phr of zinc oxide;
0.1 to 10 phr of a sulfur-based curing agent; and
0.2 to 5 phr of a cure accelerator.
